# EUROPEAN PATENT APPLICATION

(11) **EP 3 663 740 A1**
(43) Date of publication of application: **10.06.2020**
(21) Application number: 19460053.2
(22) Date of filing: 03.10.2019
(51) Int. Cl.: G01M 13/00, G01M 15/04, G01M 15/14, G01K 3/10

(54) **ELECTRONIC DEVICE FOR DETECTING DEVIATIONS OF THE SIGNAL FROM SENSORS MONITORING THE STATE OF THE DIAGNOSED OBJECT AND A WAY OF THIS DETECTION**

(30) Priority: 05.11.2018 PL 42764818
(71) Applicant: Akademia Morska W Szczecinie, 70-500 Szczecin (PL)
(72) Inventor: Chybowski, Leszek, 72-123 Kliniska (PL); Kazienko, Damian, 71-050 Szczecin (PL)
(74) Representative: Kachnic, Tadeusz

(57) **Abstract**

A method for assessing the mechanical load of power machinery, especially internal combustion piston engines, in which a device is placed on the drive shaft at the free end or on the shaft line to measure the angular position of the shaft. Then, by measuring the time of the momentary change in the position of the shaft the speed of rotation at the appropriate moments (from 0.1° - 2°) over each work cycle, i is determined. A comparison shall be made of the deviation of the calculated speeds from the average speed for the complete unit determined over n consecutive work cycles, and the calculated instantaneous speed shall be compared to the absolute permissible deviation from the calculated mean value. The permissible lower and upper limits are calculated as follows: +/-X[rpm] = (0,5 x SNBM [-] x 100% + A[%]) x (average speed [rpm]), where *SNBM* is the degree of irregularity of the machine run, and A is an empirical correction factor within the range <-10%,10%>.

## Description

The subject matter of the invention is an electronic deviation detector that monitors the value of signals from sensors that monitor the condition of a diagnosed object and the detection method.

There are well-known systems for monitoring machines and equipment (measuring, alarms, and safety) which often use portable or stationary temperature, pressure, flow, stress, etc. measurement systems that process signals from resistance sensors. These monitoring systems include those based on mobile applications, dedicated measuring systems, portable computers such as laptops, notebooks, and PDAs, desktops, and combinations of the abovementioned solutions. Analysis systems compare measured signal values to each other, to permissible or limit values, or to mean values of signals from several sources. The deviation of each measured signal from its arithmetic mean represents diagnostic information which indicates the deviation of the operating conditions of one machine component from the conditions of other machines. There are also known averaging and comparing systems based on various operating principles which use mechanical, pneumatic, hydraulic, electromagnetic, light, and electrical transducers.

The essence of the solution according to the invention is an electronic detector of deviations in the value of signals coming from sensors which monitor the condition of a diagnosed object, equipped with a power supply block, LCD display, light or sound alarm signalling, and a main switch. It has a programmable controller, a block of measurement channel selection switches, a block of potentiometers, a signal output to an external master protection alarm system, and a signal input from the diagnosed object. Beneficially, the electronic deviation detector of signals from the sensors that monitors the state of the diagnosed object is equipped with a signal output to an external monitoring system.

At the heart of the invention in the field of detection using an electronic sensor to monitor the value of signals from sensors which monitor the state of a diagnosed object is that the signal input is switched off, and the signal from this input is simulated at the same time.

Measurement data from sensors through the sensor interface 8 are processed by controller 1, which determines the average value of signals from channels selected by switches in the switch block 4. For the measured signals from these channels, an average value is determined, which is stored in the controller's memory. The controller is powered by an external power supply or a built-in battery connected to the system via power supply block 2 through the main switch 3. The frequency of sensor signals is determined by the potentiometer in the potentiometers block 5. Block 5 is also equipped with a potentiometer to determine the permissible absolute deviation of the measured signal from any of the operating connected sensors, starting from the momentary average value of the calculated signals stored in the memory of the controller 1. The determined absolute deviation and the sampling period are displayed on display screen 6. Display screen 6 also displays the numbers of the operating measurement channels from sensors from a scattered diagnosed object. An alarm signal will be generated by signalling block 7 in case of a disturbance in the operation of a diagnosed object in which the value of the measured signal of one of the measurement sensors changes, and the absolute change of the signal value from the stored mean value of the signals is greater than the preset permissible absolute deviation of the signals. Then, display screen 6 will show the channel numbers in which the absolute deviation of the value from the mean value exceeded the permissible value determined by the potentiometer. The momentary measured values and the calculated mean value of the signals are refreshed at a frequency equal to the inverse of the sampling period determined by the potentiometer in potentiometer block 5. Information about the detector's operation is transmitted via the communication interface 10 to an optional external computer system that monitors the system's operation. When an alarm occurs, a signal is also sent to an external alarm system via output 11 in order to activate an external system which sounds a siren and illuminates an alarm light signal and records the alarm status in a logbook system of disturbances during the operation of the diagnosed scattered object. Scattered objects can be diagnosed while the sensor is running and activated by the status signal of the scattered object 9, or can be continuously diagnosed by simulating the operation of the device - this function is used for testing purposes.

The signal output 10 into the computer system provides better monitoring of the system by using a graphical user interface on the computer screen. The device is fully functional without a computer connected via the output 10 because all I/O functions are located on the front panel of the device. Using the graphical interface facilitates operation and provides additional information about e.g., measured momentary deviations of signal values from the average value, improves readability, and allows changes in signal values to be recorded in the form of graphs. Disturbances in the operation of the object simultaneously triggers the activation of light or sound signalling 7, the display of information on the LCD display (6), the output of information to an optional computer supervision system 10 equipped with dedicated software, and the output of a signal to an external master system 11 to monitor the technical condition of the object being diagnosed.

A signal is sent to input 9 to notify the controller whether the monitored unit is working or not. This signal can be implemented as a binary signal by short-circuiting a specific controller input signal with a ground or power connection. The mentioned input signal activates the detector which performs its diagnostic functions by monitoring the status of the diagnosed object using sensors 8. If there is no signal at input 9 the diagnostic process is halted and remains halted until signal 9 is received. When testing the device when it is not in operation (stoppage, shutdown) as well as monitoring the status of the diagnosed object, regardless of whether it is in operation or not (continuous monitoring), the function of monitoring the status at input 9 can be simulated using an additional switch in switch block 4. This switch has 2 operating positions, "monitoring during operation of the diagnosed unit" and "continuous monitoring" ("test"). When the mentioned dedicated switch is switched to the "test" position, the detector continuously measures and analyses the values of signals from the sensors, regardless of whether the diagnosed object is operating or switched off.

The controller uses a microprocessor Arduino MEGA 2560/Artmega 2560, which reads information about temperatures from Pt100 resistive sensors through a block of input resistors with R resistances. The measuring channel is selected using switches S1 to S9. The permissible absolute deviation from the mean value of the activated measuring channels is determined using the "Max. Dev." and the set sampling period of the signals using the "Sampling" potentiometer. Information about the status of the device is displayed on an LCM1602 LCD screen. The device is switched on for operation via the main switch "S. Power". The detector is signalled to the diagnosed object by a signal to the detector via the "Engine status" input. The detector operates when the signal at the "Engine status" input is different from 0. An "Engine status" input state other than 0 can be simulated using the "Engine status" switch (located on the diagram below the switch S9). If the "Engine status" switch is activated, the detector continuously analyses sensor signals without taking into account whether the object being diagnosed is scattered in the operating state or is switched off. If the controller registers that the value of any signal or signals from the sensors connected to the operation is greater than the set percentage of the permissible absolute deviation of the signal value, an alarm is generated by means of:
- displaying information on the LCD display about the numbers of sensors where excessive absolute deviation of values was detected and the text "ALARM" ,
- switching on a light signal in the form of an LED marked in the diagram as "Alarm LED",
- a signal output to an external alarm system marked "Alarm signal to IMAS.

Additionally, an optional USB 2.0 interface outputs the signal to an external computer, where dedicated software is used to supervise the operation of the detector. The dedicated software displays information about the set absolute permissible deviation, the measured signal values, the mean value, the deviation of the signal from the mean value for each sensor, information about the active sensors, and information about the sensors which exceed the absolute deviation.

The method has been implemented in the detector based on the Arduino MEGA 2560/Artmega 2560 microprocessor controller, which reads information about temperatures from Pt100 resistive sensors through a block of input resistors with R resistances. The measuring channel is selected by switches S1 to S9. This method is used to alert the detector about the operating status of the diagnosed object with a signal to the detector via the "Engine status" input. The detector operates when the signal at the "Engine status" input is different from 0. The "Engine status" input state other than 0 can be simulated by means of the "Engine status" switch. If the "Engine status" switch is activated, the detector continuously analyses sensor signals without taking into account whether the object being diagnosed is scattered in the operating state or is switched off.

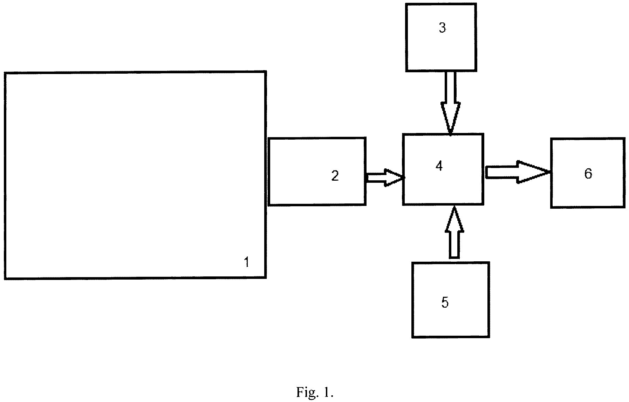

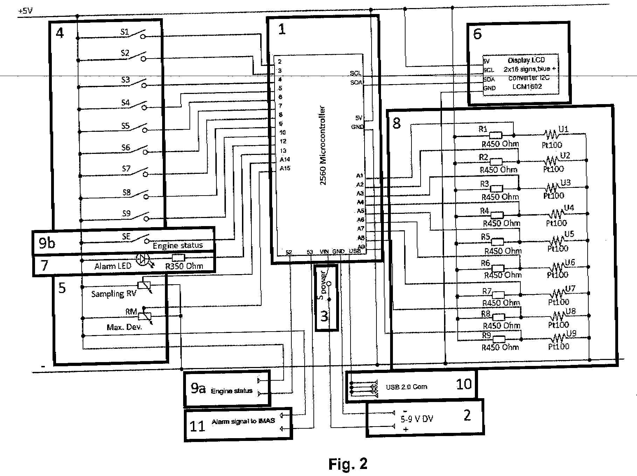

The object of the invention is shown in the example of the execution on a drawing, where Fig. 1 and Fig. 2 represent the components of the detector. The symbols in the drawings indicate in turn: 1 - programmable logic controller, 2 - power supply block, 3 - main switch, 4 - block of switches for selecting measurement channels, 5 - potentiometer block, 6 - LCD display, 7 - alarm status indication, 8 - sensors interface, 9 - signal input to the diagnosed object, 10 - signal output to the supervision system (communication interface), and 11 - signal output to the alarm system.

The Signal Deviation Detector, according to the invention presented in Fig. 1 and Fig. 2, is equipped with a programmable logic controller 1; power supply block 2 which supplies energy from an external power source or battery, main switch 3; switch block 4 which selects measurement channels to be considered when diagnosing a scattered object; potentiometer block 5 to determine the sampling period and the value of permissible absolute deviation of the measured signal from the average value of the signals recorded from all 4 measurement channels with active switches; LCD display 6 which informs about the condition of the device, the determined sampling period, the determined absolute deviation of the signal value, the determined absolute deviation of the signal value, active measurement channels, and when the permissible value of signals from sensors 8 are exceeded; light and/or sound signalling of the alarm status 7; monitoring system 9 which measures the status of the device being diagnosed; it can be bypassed to enable the diagnosis of scattered objects only during its operation and in a continuous manner, regardless of whether it is operating or switched off; a digital output for an external computerised supervision system 10; and a binary output 11 to an external alarm system protecting the operation of the diagnosed scattered object. Block 9 informing about the condition of the device is scattered and is shown in Fig. 2 as 9a - input informing about the condition of the engine - whether the engine is running, and 9b input simulation for testing purposes.

## Claims

1. The Electronic Deviation Detector monitors the value of signals from sensors that monitor the condition of a diagnosed object, equipped with power supply block (2), LCD display (6), optical or acoustic indication of an alarm condition (7), and main switch (3). It is **significant in the fact that** it has a programmable logic controller (1), a switch block (4) for the selection of measuring channels, a potentiometer block (5), a signal output (11) to the protection alarm system, and a signal input (9) from the diagnosed object.

2. The Electronic Deviation Detector monitors the value of signals from sensors that monitor the condition of a diagnosed object, according to Disclaimer 1, **significant in the fact that** it has signal output (10) to the supervisory system.

3. The method of detection using an electronic deviation detector to monitor the value of signals from sensors that monitor the condition of a diagnosed object according to Disclaimer 1 is **significant in the fact that,** the signal input (9) is deactivated while the signal from this input is simulated.
